# EUROPEAN PATENT SPECIFICATION

(11) **EP 3 043 360 B1**
(45) Date of publication and mention of the grant of the patent: **08.05.2019**
(21) Application number: 14840483.3
(22) Date of filing: 10.07.2014
(51) Int. Cl.: H01B 1/10, H01M 10/0562, H01M 10/052

(54) **METHOD FOR PRODUCING SULFIDE SOLID ELECTROLYTE**
VERFAHREN ZUR HERSTELLUNG EINES SULFID-FESTKÖRPERELEKTROLYTS
PROCÉDÉ POUR PRODUIRE UN ÉLECTROLYTE SOLIDE DE SULFURE

(30) Priority: 02.09.2013 JP 2013181209
(43) Date of publication of application: 13.07.2016
(73) Proprietor: TOYOTA JIDOSHA KABUSHIKI KAISHA, Toyota-shi, Aichi, 471-8571 (JP)
(72) Inventor: SUGIURA, Koichi, Toyota-shi Aichi 471-8571 (JP); OHASHI, Miwako, Toyota-shi Aichi 471-8571 (JP); NITA, Masako, Toyota-shi Aichi 471-8571 (JP)
(74) Representative: Hart-Davis, Jason
(86) International application number: PCT/JP2014/068469
(87) International publication number: WO 2015/029614

(56) References cited:
- EP-A1- 2 602 795
- WO-A1-2012/001773
- WO-A1-2013/008089
- JP-A- 2007 528 108
- JP-A- 2010 186 744
- JP-A- 2010 250 981
- JP-A- 2013 037 896
- US-A1- 2007 160 911

## Description

### Technical Field

This invention relates to methods for manufacturing sulfide solid electrolytes.

### Background Art

All-solid-state batteries using flame-retardant solid electrolytes have such merits that systems for securing safety are easier to be simplified than, and the productivity is superior to batteries using combustible organic electrolytic solutions. One type of all-solid-state battery like the above uses sulfide solid electrolytes.

It is essential to improve the lithium ion conductivity of solid electrolytes for making the capacity and power of All-solid-state batteries using sulfide solid electrolytes high. For example, the lithium ion conductivity can be improved by heat treatment on sulfide solid electrolytes at temperature that is no less than crystallization temperature, to make the sulfide solid electrolytes glass ceramics (at least Patent Literatures 1 and 2). The documents EP2602795 A1 and WO 2013/008089 A1 disclose prior art methods for manufacturing a sulfide solid electrolyte.

On the other hand, it is also important to micronize sulfide solid electrolytes when the sulfide solid electrolytes are employed for batteries. For example, wet grinding by means of mechanical milling is employed for micronization.

### Citation List

Patent Literature

Patent Literature 1: JP 2012-104279A
Patent Literature 2: JP 2010-218827A

### Summary of Invention

### Technical Problem

Like the above, it is important to micronize sulfide solid electrolytes, and to crystallize the sulfide solid electrolytes by means of heat treatment for improving the lithium ion conductivity. However, the inventors of the present invention found through their intensive studies that heat treatment in a crystallizing step sometimes makes sulfide solid electrolytes deteriorate, to rather worsen the lithium ion conductivity.

This invention was made in view of the above fact. An object of the present invention is to provide a method for manufacturing a sulfide solid electrolyte which can prevent deterioration of the sulfide solid electrolyte and can improve the lithium ion conductivity.

### Solution to Problem

As a result of their further intensive studies, the inventors found out that the deterioration of the sulfide solid electrolytes in the crystallizing step is caused by chemical reaction between oxygen containing organic compounds such as ether and the sulfide solid electrolytes. As a result of their still further intensive studies, the inventors found out that no more than a predetermined value of the ambient concentration of the oxygen containing organic compounds makes the lithium ion conductivity outstandingly improved when the heat treatment is carried out on the sulfide solid electrolytes in the crystallizing step.

That is, the present invention is a method for manufacturing a sulfide solid electrolyte, wherein in a step of crystallizing a sulfide solid electrolyte with heat treatment, ambient concentration of oxygen containing organic compounds is no more than 100 ppm.

"A step of crystallizing" in the present invention refers to a step of crystallizing a sulfide solid electrolyte. For example, this step is a step of crystallizing an amorphous sulfide solid electrolyte, or a step of improving the crystallinity of a sulfide solid electrolyte. A sulfide solid electrolyte is crystallized by heat treatment in both cases. Conditions for "heat treatment" are not especially limited as long as a sulfide solid electrolyte can be crystallized. However, the ambient concentration of oxygen containing organic compounds has to be 100 ppm or below. "Oxygen containing organic compounds" are not especially limited as long as the organic compounds contain oxygen in their molecules, and are ether, ester or the like. "Ambient concentration" means the concentration in the system when the heat treatment is carried out.

In the present invention, the sulfide solid electrolyte preferably contains Li, S and P.

Especially, the sulfide solid electrolyte preferably contains 10 mol% to 30 mol% of halogen.

In the present invention, the oxygen containing organic compounds are preferably ether compounds.

In the present invention, temperature for the heat treatment in the step of crystallizing is preferably 130°C to 250°C.

The present invention preferably includes a step of carrying out wet grinding on the sulfide solid electrolyte together with the oxygen containing organic compounds as a step prior to the step of crystallizing.

In this case, it is preferable to include a step of drying a specimen after the wet grinding at a reduced pressure

In the present invention, the step of crystallizing is preferably carried out at the reduced pressure.

### Advantageous Effects of Invention

According to the present invention, provided can be a method for manufacturing a sulfide solid electrolyte which can prevent deterioration of the sulfide solid electrolyte and can improve the lithium ion conductivity.

### Brief Description of Drawings

FIG. 1 is a view to explain an example of a step of manufacturing a sulfide solid electrolyte.
FIG. 2 depicts data of plotting the relationship between the lithium ion conductivity of sulfide solid electrolytes that are obtained through a crystallizing step and the ambient concentration of oxygen containing organic compounds in the crystallizing step.

### Description of Embodiments

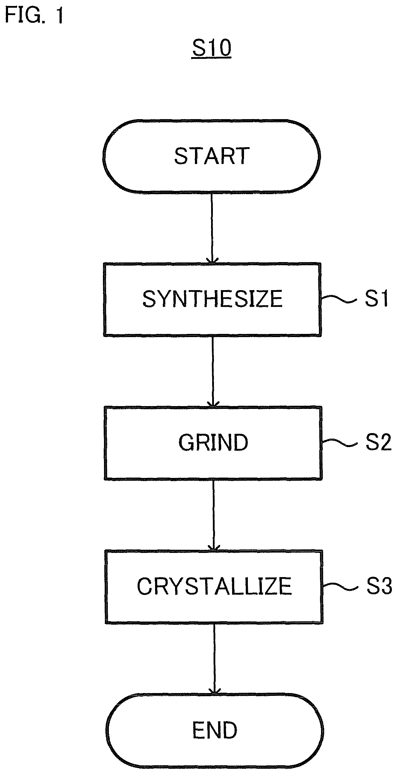

FIG. 1 depicts an example of a method for manufacturing a sulfide solid electrolyte (S10). As depicted in FIG. 1, a sulfide solid electrolyte is manufactured by Step S1 of synthesizing materials of a sulfide solid electrolyte after raw materials are mixed, Step S2 of grinding the obtained materials of a sulfide solid electrolyte, and Step S3 of crystallizing the ground materials of a sulfide solid electrolyte by means of heat treatment.

### 1. Step S1

Step S1 is a step of synthesizing materials of a sulfide solid electrolyte after raw materials are mixed. A concrete method of synthesizing materials of a sulfide solid electrolyte is not especially limited, and known methods can be applied. For example, if the raw materials are mixed and undergo mechanical milling, the materials of a sulfide solid electrolyte can be easily synthesized at normal temperature. A type of the mechanical milling is not especially limited as long as the raw materials are mixed while applying mechanical energy thereto. Examples can include a ball mill, a turbo mill, a mechanofusion and a disk mill. Among them, a ball mill is preferable, and a planetary ball mill is the most preferable.

When the materials of a sulfide solid electrolyte are synthesized, various raw materials are mixed according to a composition to be aimed. A composition of the materials of a sulfide solid electrolyte is not especially limited. However, it is preferable to contain Li, S and P. It is more preferable to contain 10 mol% to 30 mol% of halogen. The effect of the present invention is more outstanding with such materials of a sulfide solid electrolyte.

For example, in a case where the materials of a sulfide solid electrolyte containing Li, P and S are synthesized, raw materials that can be a Li source, a P source and a S source (for example, lithium sulfide and phosphorus pentasulfide) are mixed. In a case where halogen (F, Cl, Br or I) is further contained, a raw material that can be a halogen source (for example, lithium halide. Preferably, lithium iodide.) is mixed together. It is especially preferable in the present invention that the raw materials are mixed so that the composition (molar ratio) is xLiA·(100 - x)(0.75Li₂S·0.25P₂S₅) (in the formula, A is halogen, and preferably, I (iodine). 10 ≤ x ≤ 30.).

Conditions for the mechanical milling are not especially limited. For example, various raw materials, a hydrocarbon-based solvent (an aliphatic hydrocarbon such as hexane, heptane, octane, nonane and decane, an aromatic hydrocarbon such as benzene and toluene, a cyclic hydrocarbon such as cyclohexane, or the like), an optional additive, and balls (for example, balls of *ϕ*1 to 10 mm in diameter) are put into a pot of a planetary ball mill, and the mechanical milling is carried out for approximately 10 to 100 hours at a suitable revolution speed. Thus, the materials of a sulfide solid electrolyte can be easily synthesized.

It is better to carry out a drying step before the materials obtained by means of mechanical milling undergo the next step because the solvent remains in the materials. It is preferable that drying temperature is no less than volatilization temperature of the solvent and no more than 160°C, and a drying time is 10 minutes to 24 hours as drying conditions. If the drying temperature is too high, the sulfide solid electrolyte might be crystallized. The drying step is enabled to be carried out by means of a hot plate, a drying oven, an electric oven or the like.

### 2. Step S2

Step S2 is a step of grinding the materials of a sulfide solid electrolyte which are obtained through Step S1. For example, the materials of a sulfide solid electrolyte can be ground by media grinding such as a ball mill, jet grinding, cavitation grinding or the like. Specifically, it is preferable to grind the materials with a planetary ball mill. Zirconia, alumina or the like can be employed as grinding media. The diameter of a ball is not especially limited, but it is *ϕ*0.05 mm to *ϕ*5 mm, preferably *ϕ*0.1 mm to *ϕ*1 mm. A grinding time is not especially limited, but it is preferably 1 hour to 100 hours.

Step S2 is preferably by wet grinding. A solvent used for the wet grinding is not especially limited, and solvents as described in Step S1 can be used. It is preferable in the wet grinding to add ether compounds, ester compounds or nitrile compounds as an additive (dispersant) in addition to the solvent. Especially, it is preferable to add ether compounds. That is, in Step S2, it is preferable to carry out the wet grinding on the materials of a sulfide solid electrolyte along with oxygen containing organic compounds such as ether compounds.

It is better to carry out a drying step before the materials obtained by means of wet grinding undergo the next step because the solvent and additive remain in the materials. It is preferable to dry the materials at 100°C to 200°C as drying conditions. A drying time is not especially limited, and preferably is 10 minutes to 24 hours, for example. The drying step is enabled to be carried out by means of a hot plate, a drying oven, an electric oven or the like.

In the present invention, it is preferable that the drying step after the wet grinding by means of mechanical milling (after each of Step 1 and Step 2 in a case where the wet mechanical milling is carried out in both Step S1 and Step S2, especially after Step S2) is carried out at a reduced pressure. For example, the pressure inside the system is reduced with a vacuum pump. How much the pressure is reduced (the degree of vacuum) in this case is not especially limited, but the pressure is preferably 1 Pa to 2000 Pa. Carrying out the drying step at the reduced pressure makes it possible to lower the ambient concentration of the oxygen containing organic compounds, and to inhibit deterioration of the materials of a sulfide solid electrolyte in the drying step and in the crystallizing step, which is the next step.

In a case where the materials of a sulfide solid electrolyte are obtained in a wet method by means of mechanical milling in Step S1, for example, Step S2 can be omitted. That is, Step S1 can also function as Step S2. However, it is preferable to carry out the drying step after Step S1, and continuously, to further micronize the materials of a sulfide solid electrolyte in Step S2 even if the wet mechanical milling is carried out in Step S1. This is because an embodiment of the sulfide solid electrolyte can be more preferable to all-solid-state batteries.

### 3. Step S3

Step S3 is a step of crystallizing the materials of a sulfide solid electrolyte which are obtained through Step S1 and Step S2, by means of heat treatment. As described above, it is necessary to use a dispersant when an electrolyte is synthesized and micronized by wet mechanical milling or the like in the step prior to Step S3. The inventors of the present invention found through their intensive studies that dispersants do not react with electrolytes at normal temperature but cause a chemical reaction with electrolytes at crystallization temperature, to deteriorate electrolytes. As a result of their further intensive studies on conditions for suitably crystallizing the electrolyte in Step S3 without deteriorating the electrolyte, the inventors found out that it is extremely effective to have no more than predetermined ambient concentration of oxygen containing organic compounds in the heat treatment. That is, it is one feature of the present invention that in Step S3, the ambient concentration of oxygen containing organic compounds is no more than 100 ppm.

It is effective to carry out each drying step in Step S1 and Step S2 at the reduced pressure with a vacuum pump or the like as described above, or carry out Step S3 at a reduced pressure with a vacuum pump or the like in order to lower the ambient concentration of the oxygen containing organic compounds in Step S3. How much the pressure is reduced (the degree of vacuum) in this case is not especially limited, but the pressure is preferably 1 Pa to 2000 Pa. While it is one measure that no oxygen containing organic compounds are used when the materials of a sulfide solid electrolyte are synthesized and undergo the wet grinding, it is preferable to use the oxygen containing organic compounds in view of the grinding efficiency etc. It is preferable to carry out Step S3 at the reduced pressure even if no oxygen containing organic compounds are used.

It is noted that there is a possibility of mixing some oxygen containing organic compounds even if no oxygen containing organic compounds are used in the wet grinding because of a residual solvent after used in the synthesis (for the anti-stick purpose and so on), a dispersant added after the grinding step, unintended contamination or the like.

Various means can be employed as means for lowering the ambient concentration of the oxygen containing organic compounds in Step S3 other than means of reducing the pressure inside the system as described above. For example, it is also effective to make an inert gas or the like flow in the system, to expel the oxygen containing organic compounds out of the system. Alternatively, it is effective to adjust the drying temperature and drying time after Step S2, to lower the concentration of the oxygen containing organic compounds in the materials of a sulfide solid electrolyte. Moreover, the ambient concentration of the oxygen containing organic compounds can be also lowered by mixing the materials of a sulfide solid electrolyte with a solvent having greater affinity for the oxygen containing organic compounds and boiling the solvent, or drying by means of infrared rays (IR).

Temperature for the heat treatment in Step S3 can be any temperature as long as the materials of a sulfide solid electrolyte can be crystallized thereat. Concretely, it is preferable to be 130°C to 250°C. The lower limit of the temperature is more preferably 160°C, and further preferably 170°C. The upper limit thereof is more preferably 220°C, and further preferably 200°C. The heat treatment in Step S3 is enabled to be carried out by means of a hot plate, a drying oven, an electric oven or the like.

As described above, according to the manufacturing method S10 of the present invention, deterioration of the sulfide solid electrolyte can be prevented and the lithium ion conductivity of the sulfide solid electrolyte can be improved because the ambient concentration of the oxygen containing organic compounds is no more than 100 ppm in the crystallizing step (Step S3).

While the manufacturing method including Step S1, Step S2 and Step S3 is described in the above description, the present invention is not limited to such an embodiment. The present invention can have any embodiment as long as the step of crystallizing the sulfide solid electrolyte by means of the heat treatment is included. The feature of the present invention is to have no more than a predetermined value of the ambient concentration of the oxygen containing organic compounds in the crystallizing step.

The sulfide solid electrolyte obtained by the manufacturing method according to the present invention is widely applicable as solid electrolytes for sulfide all-solid-state batteries. Forms of all-solid-state batteries to which the electrolyte is applied are not especially limited.

### Examples

The manufacturing method according to the present invention will be described hereinafter in detail based on Examples. The present invention is not limited to the following specific embodiments.

### 1. Preparation of Specimen for Evaluation

### 1.1. Synthesizing Step (Step S1)

As starting materials, used were lithium sulfide (manufactured by Nippon Chemical Industries CO., LTD., 99.9% purity), phosphorus pentasulfide (manufactured by Aldrich, 99% purity) and lithium iodide (manufactured by Kojundo Chemical Laboratory Co. ,Ltd., 99% purity).

In a glove box of an argon atmosphere (dew point: -70°C), while lithium sulfide and phosphorus pentasulfide were weighed so as to have the molar ratio of 75Li₂S·25P₂S₅ (Li₃PS₄, ortho composition), lithium iodide was weighed so as to be 20 mol%. The weighed raw materials were mixed, and 2 g of the mixture was put into a zirconia container (45 ml), and in addition, 4 g of dry heptane (water content: no more than 30 ppm) and 53g of zirconia balls (ϕ: 5 mm each) were put thereinto, to completely seal the container (argon atmosphere).

This container was attached to a planetary ball mill (P7 manufactured by Fritsch), and mechanical milling was carried out at 500 rpm in the disk revolution speed for one hour and was suspended for 15 minutes. This cycle was repeated forty times. After that, the obtained specimen was dried on a hot plate at 120°C for 2 hours so that heptane was removed therefrom, to obtain materials of a sulfide solid electrolyte. The composition of the obtained materials of a sulfide solid electrolyte was 20LiI·70(0.75Li₂S·0.25P₂S₅).

### 1.2. Grinding Step (Step S2)

Put into a zirconia container (45 ml) were the obtained materials of a sulfide solid electrolyte, zirconia balls, dry heptane, and butyl ether as an additive. Wet grinding was carried out in a planetary ball mill (revolution speed: 150 rpm, for 20 hours), to obtain slurry containing the materials of a sulfide solid electrolyte which were micronized and had approximately 1 µm in grain diameter. The obtained slurry was dried on a hot plate. In a case of vacuum drying, the slurry was sealed into a hermetically sealable container, and suction was carried out with a vacuum pump, to be dried on a hot plate.

### 1.3. Crystallizing Step (Step S3)

The obtained materials of a sulfide solid electrolyte of particles were put into a hermetically sealable container. A predetermined organic compounds were measured to be put into the container to be mixed, and heat treatment was carried out in a drying oven. In a case where the heat treatment was carried out in a vacuum, suction was carried out on the hermetically sealable container with a vacuum pump, to carry out the heat treatment.

### 2. Evaluation of Specimen

A pellet in 1 cm × 1 cm × 0.5 mm was made and shaped for each sulfide solid electrolyte obtained through the crystallizing step. After shaping, the lithium ion conductivity at 25 °C was measured using an AC impedance.

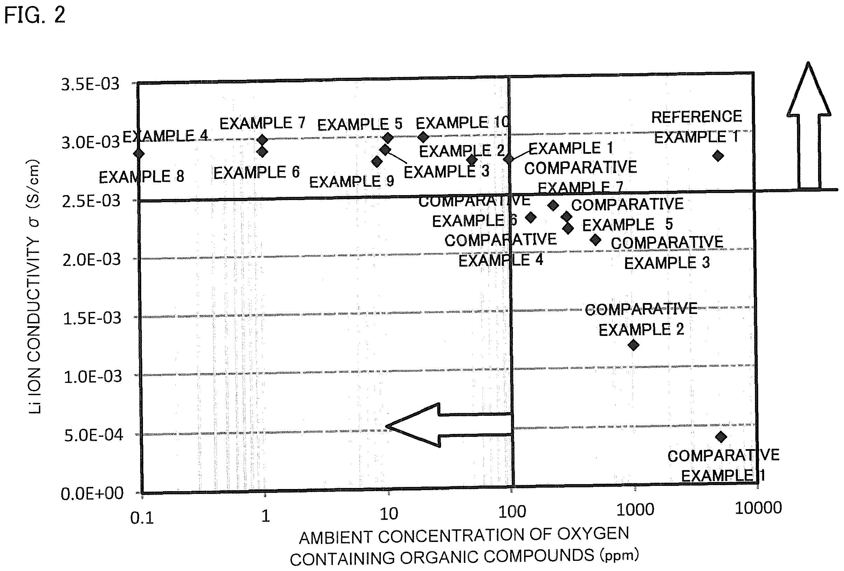

Based on the above described givens, conditions for the drying step after the wet grinding, conditions for the crystallizing step, and the ambient concentration of organic compounds in the crystallizing step were variously changed, to obtain sulfide solid electrolytes: for each sulfide solid electrolyte, the lithium ion conductivity was measured as listed in Table 1 below. Results are illustrated in Table 1 and FIG. 2.

The ambient concentration (ppm) of the oxygen containing organic compounds in Table 1 was calculated as follows: that is, a part of the specimen after the wet grinding (after micronization) and before crystallized was collected, and the gas yield was measured. Specifically, 0.01 g of specimen powder was collected, and under the Ar gas atmosphere, gaseous components produced when heated under the heat treatment conditions in Table 1 were collected with a sorbent tube, and were analyzed with a thermal-desorption GC/MS. Ar gas (flow rate: 50 ml/min) was used as a carrier gas, and Tenax GR was used for a sorbent tube. TD-100 (manufactured by Markes International) was used for a thermal desorber. HP7890/5975C (manufactured by Agilent Technologies) was used for a GC/MS. In the GC/MS, DB-5MS (manufactured by JW, 30 m × 0.25 mmID, film thickness: 1.0 µm) was used for columns, and He gas (flow rate: 1.5 ml/min) was used as a carrier gas. Toluene was used as a reference gas.

Based on the gas yield measured by the above, "gas yield per unit weight" was calculated for each specimen.

The gas yield when crystallized was calculated from the amount of the specimen where the crystallizing step (Step S3) was carried out and the above gas yield per unit weight. The calculated gas yield was divided by the volume of the hermetically sealable container, which was used in the crystallizing step (Step S3), to use the calculated value as "ambient concentration (ppm)" in Table 1.

**[Table 1]**

| | Drying Step | | Crystallizing Step | | Organic compounds | Ambient Concentration | Li Ion Conductivity |
|---|---|---|---|---|---|---|---|
| | Vacuum | Drying Conditions | Vacuum | Heat Treatment Conditions | | (ppm) | (S/cm) |
| Example 1 | ○ | 120°C×1h | × | 180°C×2h | butyl ether | 100 | 2.8E-03 |
| Example 2 | ○ | 120°C×2h | × | 180°C×2h | butyl ether | 50 | 2.8E-03 |
| Example 3 | ○ | 150°C×2h | × | 180°C×2h | butyl ether | 10 | 2.9E-03 |
| Example 4 | ○ | 180°Cx2h | × | 180°C×2h | butyl ether | 0.1 | 2.9E-03 |
| Example 5 | ○ | 180°C×2h | × | 180°C×2h | butyl ether | 10.5 | 3.0E-03 |
| Example 6 | ○ | 200°C×2h | × | 180°C×2h | butyl ether | 1 | 2.9E-03 |
| Example 7 | ○ | 200°C×2h | × | 200°C×2h | butyl ether | 1 | 3.0E-03 |
| Example 8 | × | 120°C×1h | ○ | 180°C×2h | - | 0 | 2.9E-03 |
| Example 9 | ○ | 120°C×2h | × | 180°C×2h | propyl ether | 8.5 | 2.8E-03 |
| Example 10 | ○ | 120°C×2h | × | 180°C×2h | anisole | 20.3 | 3.0E-03 |
| Comp. Ex. 1 | × | 100°C×2h | × | 180°C×2h | butyl ether | 5000 | 4.0E-04 |
| Comp. Ex. 2 | × | 120°C×1h | × | 180°C×2h | butyl ether | 1000 | 1.2E-03 |
| Comp. Ex. 3 | × | 120°C×1h | × | 180°C×2h | butyl ether | 500 | 2.1E-03 |
| Comp. Ex. 4 | × | 120°C×2h | × | 180°C×2h | butyl ether | 300 | 2.2E-03 |
| Comp. Ex. 5 | × | 120°C×2h | × | 180°C×2h | butyl ether | 292 | 2.3E-03 |
| Comp. Ex. 6 | × | 120°C×2h | × | 180°C×2h | propyl ether | 150 | 2.3E-03 |
| Comp. Ex. 7 | × | 120°C×2h | × | 180°C×2h | anisole | 230 | 2.4E-03 |
| Ref. Ex. 1 | × | 120°C×2h | × | 180°C×2h | heptane | 5000 | 2.8E-03 |

It is clear from the results on Table 1 and FIG. 2 that the ambient concentration of the oxygen containing organic compounds in the crystallizing step affected the lithium ion conductivity of the sulfide solid electrolytes. More specifically, the lithium ion conductivity of the sulfide solid electrolytes outstandingly improved under the conditions that made the ambient concentration of the oxygen containing organic compounds (butyl ether, propyl ether, anisole) in the crystallizing step no more than 100 ppm, while the conditions that made the ambient concentration 100 ppm was regarded as the boundary. As described above, the outstanding and specific effect according to the present invention was confirmed.

### Industrial Applicability

The present invention can be widely utilized as an art of improving the lithium ion conductivity of sulfide solid electrolytes for all-solid-state batteries.

## Claims

1. A method for manufacturing a sulfide solid electrolyte, wherein in a step of crystallizing a sulfide solid electrolyte with heat treatment, ambient concentration of oxygen containing organic compounds is no more than 100 ppm.

2. The method according to claim 1, wherein the sulfide solid electrolyte contains Li, S and P.

3. The method according to claim 2, wherein the sulfide solid electrolyte contains 10 mol% to 30 mol% of halogen.

4. The method according to any one of claims 1 to 3, wherein the oxygen containing organic compounds are ether compounds.

5. The method according to any one of claims 1 to 4, wherein temperature for the heat treatment in the step of crystallizing is 130°C to 250°C.

6. The method according to any one of claims 1 to 5, comprising:
a step of carrying out wet grinding on the sulfide solid electrolyte together with the oxygen containing organic compounds as a step prior to the step of crystallizing.

7. The method according to claim 6, comprising a step of drying a specimen after the wet grinding at a reduced pressure.

8. The method according to any one of claims 1 to 7, wherein the step of crystallizing is carried out at the reduced pressure.

## Patentansprüche

1. Verfahren zum Herstellen eines Sulfid-Festkörperelektrolyts, wobei in einem Schritt des Kristallisierens eines Sulfid-Festkörperelektrolyts mit Wärmebehandlung die Umgebungskonzentration von sauerstoffhaltigen organischen Verbindungen nicht größer als 100 ppm ist.

2. Verfahren nach Anspruch 1, wobei der Sulfid-Festkörperelektrolyt Li, S und P enthält.

3. Verfahren nach Anspruch 2, wobei der Sulfid-Festkörperelektrolyt 10 Mol-% bis 30 Mol-% Halogen enthält.

4. Verfahren nach einem beliebigen der Ansprüche 1 bis 3, wobei die sauerstoffhaltigen organischen Verbindungen Etherverbindungen sind.

5. Verfahren nach einem beliebigen der Ansprüche 1 bis 4, wobei die Temperatur für die Wärmebehandlung in dem Schritt des Kristallisierens 130 °C bis 250 °C ist.

6. Verfahren nach einem beliebigen der Ansprüche 1 bis 5, umfassend:
einen Schritt des Durchführens von Nassmahlen hinsichtlich des Sulfid-Festkörperelektrolyts gemeinsam mit den sauerstoffhaltigen organischen Verbindungen als Schritt vor dem Schritt des Kristallisierens.

7. Verfahren nach Anspruch 6, umfassend einen Schritt des Trocknens eines Probeexemplars nach dem Nassmahlen bei einem reduzierten Druck.

8. Verfahren nach einem beliebigen der Ansprüche 1 bis 7, wobei der Schritt des Kristallisierens bei dem reduzierten Druck durchgeführt wird.

## Revendications

1. Procédé de fabrication d'un électrolyte solide de sulfure, dans lequel dans une étape de cristallisation d'un électrolyte solide de sulfure avec un traitement thermique, la concentration ambiante en composés organiques contenant de l'oxygène n'est pas supérieure à 100 ppm.

2. Procédé selon la revendication 1, dans lequel l'électrolyte solide de sulfure contient Li, S et P.

3. Procédé selon la revendication 2, dans lequel l'électrolyte solide de sulfure contient de 10 % en mol à 30 % en mol d'halogène.

4. Procédé selon l'une quelconque des revendications 1 à 3, dans lequel les composés organiques contenant de l'oxygène sont des composés d'éthers.

5. Procédé selon l'une quelconque des revendications 1 à 4, dans lequel la température pour le traitement thermique dans l'étape de cristallisation est de 130°C à 250°C.

6. Procédé selon l'une quelconque des revendications 1 à 5, comprenant :
une étape de réalisation de broyage humide sur l'électrolyte solide de sulfure avec les composés organiques contenant de l'oxygène comme une étape préalable à l'état de cristallisation.

7. Procédé selon la revendication 6, comprenant une étape de séchage d'un spécimen après le broyage humide à une pression réduite.

8. Procédé selon l'une quelconque des revendications 1 à 7, dans lequel l'étape de cristallisation est réalisée à la pression réduite.
